# EUROPEAN PATENT APPLICATION

(11) **EP 2 960 697 A1**
(43) Date of publication of application: **30.12.2015**
(21) Application number: 14174113.2
(22) Date of filing: 26.06.2014
(51) Int. Cl.: G02B 6/44

(54) **Slack storage device and fiber optic distribution system**

(71) Applicant: CCS Technology, Inc., Wilmington, DE 19803 (US)
(72) Inventor: Gralewski-Sek, Grzegorz, 91-849 Lodz (PL)
(74) Representative: Sturm, Christoph

(57) **Abstract**

Slack storage device (10) for handling excess-length of fiber optic cables, comprising: a housing (24) having a mounting wall (25); and a plurality of guide elements (26, 27, 28, 29, 30, 31, 32, 33, 34, 35, 36, 37, 38, 39) mounted to the mounting wall (25) of the housing (24). The guide elements (26, 27, 28, 29, 30, 31, 32, 33, 34, 35, 36, 37, 38, 39) mounted to the mounting wall (25) of the housing (24) are grouped in vertically oriented columns (40, 41, 42), namely in a first outer column (40) being positioned adjacent to a first side (43) of the housing (24), a second outer column (41) being positioned adjacent to a second side (44) of the housing (24) and a middle column (42) positioned between the outer columns (40, 41). The guiding elements (26, 27, 28, 29, 30, 31, 32, 33, 34, 35, 36, 37) of the outer columns (40, 41) are positioned between a bottom end (46) and a top end (45) of the mounting wall (24), wherein the guiding elements (38, 39) of the middle column (42) are positioned adjacent to the bottom end (46) of the mounting wall (25) in a region of a bottom section (47) of the mounting wall (25), namely each of the guide elements in a predetermined location such that the distances between adjacent guide elements at least within the outer columns (40, 41) provide for a specified amount of at least one fiber optic cable to be stored in the slack storage device (10) when the respective fiber optic cable is guided around one guide element (26, 27, 28, 29, 30, 31) of the first outer column (40), then around one guide element (38, 39) of the middle column (42) and then around one guide element (32, 33, 34, 35, 36, 37) of the second outer column (41) thereby providing a M-like cable loop of the respective fiber optic cable.

## Description

The present patent application relates to a slack storage device for handling excess-length of fiber optic cables. The present patent application relates further to a fiber optic distribution system comprising a slack storage device.

When constructing fiber optic cable networks, fiber optic distribution devices are required for ensuring structured wiring of the fiber optic cables. The product catalogue "Accessories for Fiber Optic Networks, Edition 1, Corning Cable Systems, Page 150, Year 2001" discloses a fiber optic distribution device in the form of a distribution cabinet, wherein the distribution cabinet comprises a housing and fiber optic modules positioned inside the housing. The fiber optic modules can handle junction points between fiber optic cables, wherein the fiber optic modules can be provided by patch modules and/or splice modules. When a large number of fiber optic distribution devices are required for constructing a fiber optic cable network, the fiber optic distribution devices form a fiber optic distribution system. In this case, structured wiring of fiber optic modules of the different fiber optic distribution devices is necessary.

Two basic procedures are known for providing structured wiring in a fiber optic distribution system comprising a plurality of fiber optic distribution devices. In a first procedure, a precisely defined length of a patch cable is provided for each wiring between two fiber optic devices, with the result that no excess-lengths are produced within the fiber optic distribution system comprising a plurality of fiber optic distribution devices. For this purpose, a large number of patch cables of different lengths need to be available. In accordance with a second procedure, only a single length of a patch cable is provided, with this length being designed for the maximum distance between the fiber optic distribution devices to be wired, in which case excess-lengths of different lengths are produced in the system which need to be handled correspondingly.

US 2010/0129040 A1 discloses a fiber optic distribution system comprising a plurality of fiber optic distribution devices. The fiber optic distribution system disclosed in this prior art document comprises fiber optic distribution devices being arranged in logic groups, wherein in order to provide structured wiring of fiber optic devices within the same logic group two lengths of patch cables are provided, and wherein in order to provide structured wiring of fiber optic devices of two different logic groups a further length of patch cable is provided. This enables structured wiring with a defined combination of different lengths of fiber optic cables without the need of a slack storage device within the fiber optic distribution system.

The present application is based on the object to provide a slack storage device for the handling of excess-length of fiber optic cables within a fiber optic distribution system providing a beneficial storage of the excess-length and to provide a fiber optic distribution system comprising such a slack storage device.

The slack storage device according to the present patent application is defined in claim 1.

The slack storage device comprises a housing having a mounting wall and a plurality of guide elements mounted to the mounting wall of the housing. The guide elements mounted to the mounting wall of the housing are grouped in vertically oriented columns, namely in a first outer column being positioned adjacent to a first side of the housing, a second outer column being positioned adjacent to a second side of the housing, and a middle column positioned between the outer columns. The guiding elements of the outer columns are positioned between a bottom end and a top end of the mounting wall. The guiding elements of the middle column are positioned adjacent to the bottom end of the mounting wall in a region of a bottom section of the mounting wall. Each of the guide elements is positioned in a predetermined location such that the distances between adjacent guide elements at least within the outer columns provide for a specified amount of at least one fiber optic cable to be stored in the slack storage device when the respective fiber optic cable is guided around one guide element of the first outer column, then around one guide element of the middle column and then around one guide element of the second outer column thereby providing a M-like cable loop of the fiber optic cable.

The slack storage device according to the present patent application provides a beneficial storage of the excess-length.

According to a preferred embodiment, the number of guide elements within the first outer column and the number of guide elements within the second outer column are identical, wherein the number of the guide elements within the middle column is smaller than the number of guide elements within each of the outer columns. This provides a further improved beneficial storage of the excess-length.

The fiber optic distribution system according to the present patent application is defined in claim 4.

The fiber optic distribution system comprises a plurality of fiber optic distribution devices, and a slack storage device according to present patent application. A first number of fiber optic distribution devices is positioned side-by-side in a first horizontally oriented row adjacent to the first side of the mounting wallof the slack storage device. A second number of fiber optic distribution devices is positioned side-by-side in a second horizontally oriented row adjacent to the second side of the mounting wall of the slack storage device. Each fiber optic cable running between a fiber optic distribution device of the first row and a fiber optic distribution device of the second row is guided at guide elements of the two outer columns and the middle column of the slack storage device providing the M-like cable loop, wherein each of the guide elements of the slack storage device is positioned in a predetermined location such that the distances between adjacent guide elements at least within the outer columns are adapted to the widths of the fiber optic distribution devices to provide for a specified amount of at least one fiber optic cable to be stored in the slack storage device when the respective fiber optic cable is guided around the guide elements providing the M-like cable loop of the respective fiber optic cable. A beneficial storage of the excess-length is provided by the fiber optic distribution system according to the present patent application.

Embodiments of the fiber optic distribution device are given in the dependent claims and the description below. Exemplary embodiments will be explained in more detail with reference to the drawing, in which:
- Figure 1: shows a slack storage device;
- Figure 2: shows a fiber optic distribution system comprising a plurality of fiber optic distribution devices and a slack storage device;
- Figure 3: shows a first detail of the fiber optic distribution system of Figure 2;
- Figure 4: shows a second detail of the fiber optic distribution system of Figure 2; and
- Figure 5: shows a third detail of the fiber optic distribution system of Figure 2.

The present patent application relates to a slack storage device for handling excess-length of fiber optic cables and to a fiber optic distribution system comprising a slack storage device.

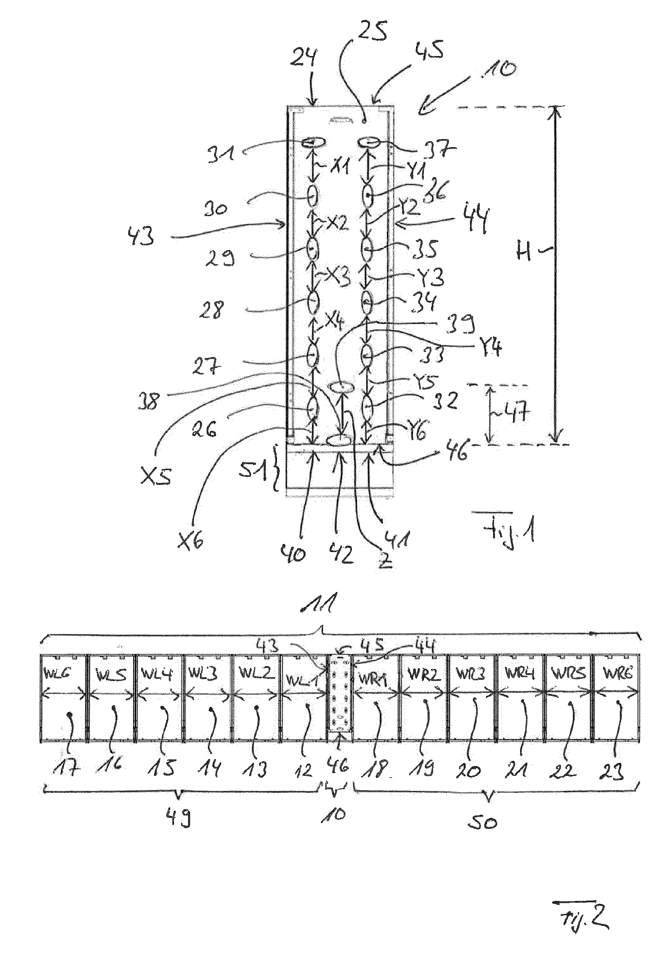

Figure 1 shows a schematic view of a slack storage device 10 according to the present application.

The slack storage device 10 is used for the handling of excess-length of fiber optic cables within a fiber optic distribution system 11 comprising several fiber optic distribution devices 12, 13, 14, 15, 16, 17, 18, 19, 20, 21, 22, 23 and such a slack storage device 10 (see Figure 2).

The slack storage device 10 comprises a housing 24 having a mounting wall 25. The mounting wall 25 is provided by a back wall of the housing 24 having a generally upright orientation. The slack storage device 10 further comprises a plurality of guide elements 26, 27, 28, 29, 30, 31, 32, 33, 34, 35, 36, 37, 38 mounted to the mounting wall 25 of the housing 24.

The guide elements 26, 27, 28, 29, 30, 31, 32, 33, 34, 35, 36, 37, 38, 39 mounted to the mounting wall 25 of the housing 24 are grouped in vertically oriented columns 40, 41 and 42, namely in a first outer column 40 being positioned adjacent to a first side 43 of the housing 24, a second outer column 41 being positioned adjacent to a second side 44 of the housing 24 and a middle column 42 positioned between the two outer columns 40, 41.

The guiding elements 26, 27, 28, 29, 30 and 31 of the first outer column 40 as well as the guiding elements 32, 33, 34, 35, 36 and 37 of the second outer column 41 are positioned between a top end 45 and a bottom end 46 of the mounting wall 25 within the vertical height H of the mounting wall 25.

The guiding elements 38, 39 of the middle column 42 are positioned adjacent to the bottom end 46 of the mounting wall 25 in a region of a bottom section 47 of the mounting wall 25.

Each fiber optic cable can be guided around one guide element 26, 27, 28, 29, 30 or 31 of the first outer column 40, then around one guide element 38 or 39 of the middle column 42 and then around one guide element 32, 33, 34, 35, 36 or 37 of the second outer column 41 providing a M-like cable loop of the respective fiber optic cable.

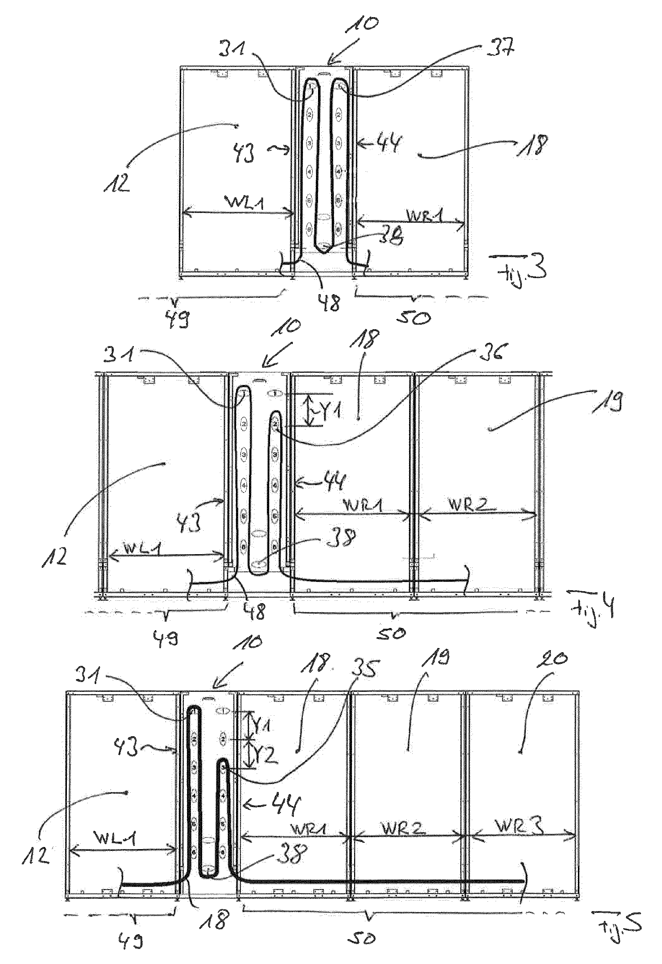

Such M-like cable loops of the respective fiber optic cables can be best seen in Figures 3 to 5. Each fiber optic cable 48 enters into the slack storage device 10 and passes out of the slack storage device 10 through the sides 43, 44 of the housing 24, namely through a lower bottom part 51 of the housing 24 being positioned below the mounting wall 24 carrying the guide elements 26, 27, 28, 29, 30, 31, 32, 33, 34, 35, 36, 37, 38.

A cable 48 entering into the slack storage device 10 through the lower bottom part 51 from the first side 43 of the housing 24 is guided upwards to one of the guide element 26, 27, 28, 29, 30 or 31 of the first outer column 40 being positioned adjacent to first side 43 of the housing 24, then guided around said guide element 26, 27, 28, 29, 30 or 31 of the first outer column 40 and then downwards to one of the guide elements 38 or 39 of the middle column 42, then guided around said guide element 38 or 39 of the middle column 42 and then upwards to one of the guide elements 32, 33, 34, 35, 36 or 37 of the second outer column 41, then guided around said guide element 32, 33, 34, 35, 36 or 37 of the second outer column 41 and then downwards for passing out of the slack storage device 10 through the lower bottom part 51 of the housing 24, namely through the second side 44. This provides the M-like cable loop of the respective fiber optic cable 48 within the slack storage device 10.

The number of guide elements 26, 27, 28, 29, 30, 31 within the first outer column 40 and the number of guide elements 32, 33, 34, 35, 36, 37 within the second outer column 41 are identical. The number of the guide elements 38, 39 within the middle column 42 is smaller than the number of guide elements within each of the outer columns 40,41.

The number of guide elements 26, 27, 28, 29, 30, 31 within the first outer column 40 and the number of guide elements 32, 33, 34, 35, 36, 37 within the second outer column 42 is preferably larger than four, and the number the guide elements 38, 39 within the middle column 42 is preferably two.

In the exemplary embodiment shown, the number of guide elements 26, 27, 28, 29, 30, 31 within the first outer column 40 and the number of guide elements 32, 33, 34, 35, 36, 37 within the second outer column 42 is six, and that the number the guide elements 38, 39 within the middle column 42 is two. However, any number of guide elements may be used. Further on, the number of guide elements in outer column 40 may not equal the number of guide elements in outer column 41.

The guide elements 26, 27, 28, 29, 30, 31 and the guide elements 32, 33, 34, 35, 36, 37 within the respective outer columns 40, 41 are distributed over the length of the respective outer column 40, 41.

Each of two adjacent guide elements 31 and 30, 30 and 29, 29 and 28, 28 and 27, 27 and 26 of the respective outer column 40 are separated by a distance X, individually X1, X2, X3, X4, and X5. The most lower guide element 26 of the outer column 40 has a distance X6 from the bottom end 46 of the mounting wall 25. Each of two adjacent guide elements 37 and 36, 36 and 35, 35 and 34, 34 and 33, 33 and 32 of the respective outer column 41 are separated by a distance Y, individually Y1, Y2, Y3, Y4, and Y5. The most lower guide element 32 of the outer column 41 has a distance Y6 from the bottom end 46 of the mounting wall 25.

All of the above distances X, namely X1 to X6, may be but are not required to be equal. In case all of the above distances X are equal, the following is true: X1 =X2=X3=X4=X5=X6. Further on, all of the above distances Y, namely Y1 to Y6, may be but are not required to be equal. In case all of the above distances Y are equal, the following is true: Y1=Y2=Y3=Y4=Y5=Y6. Similarly, all of the above distances X may be the same as all of the above distances Y but are not required to be the same. In case all of the above distances X are the same as all of the above distances Y, the following is true: X1=Y1, X2=Y2, X3=Y3; X4=Y4, X5=Y5, X6=Y6.

In the shown embodiment all distances X are equal and all distances Y are equal with X equaling Y, so that X1=X2=X3=X4=X5=X6=Y1=Y2=Y3=Y4=Y5=Y6.

Figure 2 shows a schematic view of a fiber optic distribution system 11 comprising several fiber optic distribution devices 12, 13, 14, 15, 16, 17, 18, 19, 20, 21, 22, 23 and a slack storage device 10 described above.

A first number of fiber optic distribution devices 12, 13, 14, 15, 16, 17 is positioned side-by-side in a first horizontally oriented row 49 adjacent to the first side 43 of the mounting wall 25 of the slack storage device 10. A second number of fiber optic distribution devices 18, 19, 20, 21, 22, 23 is positioned side-by-side in a second horizontally oriented row 50 adjacent to the second side 44 of the mounting wall 25 of the slack storage device 10. Each fiber optic cable 48 running between a fiber optic distribution device 12, 13, 14, 15, 16, 17 of the first row 49 and a fiber optic distribution device 18, 19, 20, 21, 22, 23 of the second row 50 is guided at one of guide elements of each of the two outer columns 40, 41 of the slack storage device 10 and/or at one of guide elements of the middle column 42 of the slack storage device 10 providing the M-like cable loop.

The number of guide elements 26, 27, 28, 29, 30, 31 within the first outer column 40 of the slack storage device 10 does not have to but preferably corresponds to the number of fiber optic distribution devices 12, 13, 14, 15, 16, 17 within the first row 49 that is positioned adjacent the first side 43 of the housing 24 of the slack storage device 10.

The number of guide elements 32, 33, 34, 35, 36, 37 within the second outer column 41 of the slack storage device 10 does not have to but preferably corresponds to the number of fiber optic distribution devices 18, 19, 20, 21, 22, 23 within the second row 50 that is positioned adjacent the second side 44 of the housing 24 of the slack storage device 10.

The distance X6 between the most lower guide element 26 and the bottom end 46 of the mounting wall 25, and the distances X1, X2, X3, X4 and X5 between two each adjacent guide elements 26, 27, 28, 29, 30 and 31, respectively, in outer column 40 is determined from the horizontal widths WL1, WL2, WL3, WL4, WL5, and WL6 between adjacent fiber optic distribution devices 12, 13, 14, 15, 16, 17 of the first row 49, respectively, in such a way that the appropriate amount of fiber optic cable 48 is routed from the slack storage device 10 to the respective fiber optic distribution devices 12, 13, 14, 15, 16, 17.

The distance Y6 between the most lower guide element 32 and the bottom the bottom end 46 of the mounting wall 25, and the distances Y1, Y2, Y3, Y4 and Y5 between each two adjacent guide elements 32, 33, 34, 35, 36, respectively, in outer column 41 is determined from the horizontal widths WR1, WR2, WR3, WR4, WR5, and WR6 between adjacent fiber optic distribution devices 18, 19, 20, 21, 22, 23 of the second row 50, respectively, in such a way that the appropriate amount of fiber optic cable 48 is routed from the slack storage device 10 to the respective fiber optic distribution devices 18, 19, 20, 21, 22, 23.

In this regard, the respective distances X1, X2, X3, X4, X5 and X6 may be between 50% and 30% of the respective horizontal widths WL1, WL2, WL3, WL4, WL5, and WL6 of fiber optic distribution devices 12, 13, 14, 15, 16, 17 within the first row 49, while the respective distances Y1, Y2, Y3, Y4, Y5 and Y6 may be between 50% and 30% of the respective horizontal widths WR1, WR2, WR3, WR4, WR5, and WR6 between adjacent fiber optic distribution devices 18, 19, 20, 21, 22, 23 within the second row.

Preferably, the following is true for the distances X and Y between each two adjacent guide elements within the two outer columns 40, 41:
0.3*WL1 ≤ X1 ≤ 0.5*WL1
0.3*WL2 ≤ X2 ≤ 0.5*WL2
0.3*WL3 ≤ X3 ≤ 0.5*WL3
0.3*WL4 ≤ X4 ≤ 0.5*WL4
0.3*WL5 ≤ X5 ≤ 0.5*WL5
0.3*WL6 ≤ X6 ≤ 0.5*WL6
0.3*WR1 ≤ Y1 ≤ 0.5*WR1
0.3*WR2 ≤ Y2 ≤ 0.5*WR2
0.3*WR3 ≤ Y3 ≤ 0.5*WR3
0.3*WR4 ≤ Y4 ≤ 0.5*WR4
0.3*WR5 ≤ Y5 ≤ 0.5*WR5
0.3*WR6 ≤ Y6 ≤ 0.5*WR6

Preferably, the distance Z between the guide elements 38, 39 within the middle column 42 is adapted to the distances X1, X2, X3, X4, X5, Y1, Y2, Y3, Y4, Y5 of the guide elements 26, 27, 28, 29, 30, 31, 33, 34, 35, 36, 37 within the outer columns 40, 41.

In the embodiment shown, the distance Z is the same as the distance X1 to X6 and Y1 to Y6.

In this manner the guide elements 26, 27, 28, 29, 30, 31, 33, 34, 35, 36, 37, 38, 39 may be positioned in predetermined locations such that the distances between adjacent guide elements provide for a specified amount of fiber optic cable 48 to be stored in the slack storage device 10.

In particular, each guide element 26, 27, 28, 29, 30, 31, 33, 34, 35, 36, 37, 38, 39 may be positioned in predetermined locations such that the distances between adjacent guide elements is based on the relative widths of the fiber optic distribution devices to provide for a specified amount of fiber optic cable 48 to be routed from the slack storage device 10 to each of the fiber optic distribution devices.

The above described arrangement of the guide elements 26, 27, 28, 29, 30, 31, 32, 33, 34, 35, 36, 37, 38 of the slack storage device 10 in three vertically oriented, parallel columns 40, 41, 42 with the above described distances X, Y and Z between each two adjacent guide elements 26 and 27, 27 and 28, 28 and 29, 29 and 30, 30 and 31, 32 and 33, 33 and 34, 34 and 35, 35 and 36, 36 and 37, 38 and 39 provides a beneficial storage of the excess-length of fiber optic cables 48 running between two fiber optic distribution devices positioned at opposite sides 43, 44 of the slack storage device 10. A specific M-like cable path for the excess-length is provided with dedicated distances X, Y and Z between guide elements that allows connection between fiber optic distribution devices skipping fiber optic distribution devices standing in between with one jumper length.

As shown in Figure 3, when fiber optic distribution devices 12, 18 standing directly nearby to slack storage device 10 have to be connected by a fiber optic cable 48, the excess-length of the same is guided around the most upper guide elements 31, 37 of each of the outer columns 40, 41 and around the most lower guide element 38 of the middle column 42.

Figure 4 shows a connection between the first fiber optic distribution device 12 from left hand side row 49 and the second fiber optic distribution device 19 from right hand side row 50. In this case the excess-length of the respective fiber optic cable 48 is guided around the most upper guide element 31 of the left hand outer column 40, around the guide element 36 of the right hand outer column 41 being positioned directly below the most upper guide element 37 of the right hand outer column 41, and around the most lower guide element 38 of the middle column 42. The distance Y1 between the guide elements 36 and 37 is adapted to the width WR1 of fiber optic distribution device 18.

Figure 5 shows a connection between the first fiber optic distribution device 12 from left hand side row 49 and the third fiber optic distribution device 20 from right hand side row 50. In this case the excess-length of the respective fiber optic cable 48 is guided around the most upper guide element 31 of the left hand outer column 40, around the guide element 35 of the right hand outer column 41 being positioned two distances x below the most upper guide element 37 of the right hand outer column 41, and around the most lower guide element 38 of the middle column 42. The distance Y2 between the guide elements 36 and 35 is adapted to the width WR2 of fiber optic distribution device 19.

As described above, the slack storage device 10 allows connection between fiber optic distribution devices skipping fiber optic distribution devices standing in between with one jumper length. The slack storage device 10 gives the possibility to connect different fiber optic distribution devices with one length of fiber optic patch cables.

As described above, the slack storage device 10 uses two outer columns 40 and 41 of guide elements each having a number of guide elements corresponding to the number of fiber optic distribution devices within the row 49, 50 of fiber optic distribution devices being positioned adjacent the respective outer column 40 and 41.

The slack storage device 10 further uses additional two guide elements 38, 39 in a middle column 42. These guide elements 38, 39 have mainly the function to split a large amount of cables 48 in two bundles.

The distances X, Y, Z between each two adjacent guide elements within each of the columns 40, 41, 42 is matched in that way to store amount of cable excess-length accordingly to the width W of the respective fiber optic distribution device.

The arrangement of the guide elements within the columns 40, 41, 42 provides storage of cable excess-length in the M style. The respective fiber optic cable is guided two times upwards and two times downwards.

### List of reference numerals

- 10: slack storage device
- 11: fiber optic distribution system
- 12: fiber optic distribution device
- 13: fiber optic distribution device
- 14: fiber optic distribution device
- 15: fiber optic distribution device
- 16: fiber optic distribution device
- 17: fiber optic distribution device
- 18: fiber optic distribution device
- 19: fiber optic distribution device
- 20: fiber optic distribution device
- 21: fiber optic distribution device
- 22: fiber optic distribution device
- 23: fiber optic distribution device
- 24: housing
- 25: mounting wall
- 26: guide element
- 27: guide element
- 28: guide element
- 29: guide element
- 30: guide element
- 31: guide element
- 32: guide element
- 34: guide element
- 35: guide element
- 36: guide element
- 37: guide element
- 38: guide element
- 39: guide element
- 40: outer column
- 41: outer column
- 42: middle column
- 43: side
- 44: side
- 45: top end
- 46: bottom end
- 47: bottom section
- 48: fiber optic cable
- 49: row
- 50: row
- 51: bottom part

## Claims

1. A slack storage device (10) for handling excess-length of fiber optic cables, comprising:
a housing (24) having a mounting wall (25); and
a plurality of guide elements (26, 27, 28, 29, 30, 31, 32, 33, 34, 35, 36, 37, 38, 39) mounted to the mounting wall (25) of the housing (24);
wherein the guide elements (26, 27, 28, 29, 30, 31, 32, 33, 34, 35, 36, 37, 38, 39) mounted to the mounting wall (25) of the housing (24) are grouped in vertically oriented columns (40, 41, 42), namely in a first outer column (40) being positioned adjacent to a first side (43) of the housing (24), a second outer column (41) being positioned adjacent to a second side (44) of the housing (24) and a middle column (42) positioned between the outer columns (40, 41);
wherein the guiding elements (26, 27, 28, 29, 30, 31, 32, 33, 34, 35, 36, 37) of the outer columns (40, 41) are positioned between a bottom end (46) and a top end (45) of the mounting wall (24), and wherein the guiding elements (38, 39) of the middle column (42) are positioned adjacent to the bottom end (46) of the mounting wall (25) in a region of a bottom section (47) of the mounting wall (25), namely each of the guide elements in a predetermined location such that the distances between adjacent guide elements at least within the outer columns (40, 41) provide for a specified amount of at least one fiber optic cable to be stored in the slack storage device (10) when the respective fiber optic cable is guided around one guide element (26, 27, 28, 29, 30, 31) of the first outer column (40), then around one guide element (38, 39) of the middle column (42) and then around one guide element (32, 33, 34, 35, 36, 37) of the second outer column (41) thereby providing a M-like cable loop of the respective fiber optic cable.

2. The slack storage device of claim 1, **characterized in that** the number of guide elements (26, 27, 28, 29, 30, 31) within the first outer column (40) and the number of guide elements (32, 33, 34, 35, 36, 37) within the second outer column (41) are identical, and that the number of the guide elements (38, 39) within the middle column (42) is smaller than the number of guide elements within each of the outer columns (40, 41).

3. The slack storage device of claim 1 or 2, **characterized in that** the number of guide elements within each of the outer columns (40, 41) is larger than four, preferably six, and that the number the guide elements within the middle column (42) is two.

4. A fiber optic distribution system (11) comprising:
a plurality of fiber optic distribution devices (12, 13, 14, 15, 16, 17, 18, 19, 20, 21, 22, 23), and
a slack storage device (10) according to one of claims 1-3;
wherein a first number of fiber optic distribution devices (12, 13, 14, 15, 16, 17) is positioned side-by-side in a first horizontally oriented row (49) adjacent to the first side (43) of the mounting wall (25) of the slack storage device (10);
wherein a second number of fiber optic distribution devices (18, 19, 20, 21, 22, 23) is positioned side-by-side in a second horizontally oriented row (50) adjacent to the second side (44) of the mounting wall (25) of the slack storage device (10);
wherein each fiber optic cable running between a fiber optic distribution device of the first row (49) and a fiber optic distribution device of the second row (50) is guided at guide elements of the two outer columns (40, 41) and the middle column (42) of the slack storage device (10) providing the M-like cable loop, and wherein each of the guide elements (26, 27, 28, 29, 30, 31, 32, 33, 34, 35, 36, 37, 38, 39) of the slack storage device (10) is positioned in a predetermined location such that the distances between adjacent guide elements at least within the outer columns (40, 41) are adapted to the widths of the fiber optic distribution devices to provide for a specified amount of at least one fiber optic cable to be stored in the slack storage device (10) when the respective fiber optic cable is guided around the guide elements providing the M-like cable loop of the respective fiber optic cable.

5. The fiber optic distribution system of claim 4, **characterized in that** the number of guide elements within the first outer column (40) of the slack storage device (10) corresponds to the number of fiber optic distribution devices in the first row (49), and that the number of guide elements within the second outer column (41) of the slack storage device (10) corresponds to the number of fiber optic distribution devices in the second row (50).

6. The fiber optic distribution system of claim 4 or 5, **characterized in that** the distance (X6, Y6) between the most lower guide element (26, 32) of the outer columns (40, 41) and the bottom end (46) of the mounting wall (25), and the distances (X1, X2, X3, X4, X5, Y1, Y2, Y3, Y4, Y5) between each two adjacent guide elements (26, 27, 28, 29, 30, 31, 33, 34, 35, 36, 37) within the two outer columns (40, 41), respectively, is determined from the horizontal widths (WL1, WL2, WL3, WL4, WL5, WL6, WR1, WR2, WR3, WR4, WR5, WR6) between adjacent fiber optic distribution devices (12, 13, 14, 15, 16, 17), respectively, in such a way that the appropriate amount of fiber optic cable is routed from the slack storage device (10) to the respective fiber optic distribution device (12, 13, 14, 15, 16, 17, 18, 19, 20, 21, 22, 23).

7. The fiber optic distribution system of one of claims 4 to 6, **characterized in that** the distance (X1, X2, X3, X4, X5, Y1, Y2, Y3, Y4, Y5) of each two adjacent guide elements (26, 27, 28, 29, 30, 31, 33, 34, 35, 36, 37) within the outer columns (40, 41) is adapted to the horizontal width (WL1, WL2, WL3, WL4, WL5, WL6, WR1, WR2, WR3, WR4, WR5, WR6) of a respective fiber optic distribution device (12, 13, 14, 15, 16, 17, 18, 19, 20, 21, 22, 23) in such a way that the horizontal width (WL1, WL2, WL3, WL4, WL5, WL6, WR1, WR2, WR3, WR4, WR5, WR6) of a fiber optic distribution device (12, 13, 14, 15, 16, 17, 18, 19, 20, 21, 22, 23) corresponds between two-times and three-times the distance (X1, X2, X3, X4, X5, Y1, Y2, Y3, Y4, Y5) of two respective adjacent guide elements (26, 27, 28, 29, 30, 31, 33, 34, 35, 36, 37).

8. The fiber optic distribution system of one of claims 4 to 6, **characterized in that** the distance (X1, X2, X3, X4, X5, Y1, Y2, Y3, Y4, Y5) of each two adjacent guide elements (26, 27, 28, 29, 30, 31, 33, 34, 35, 36, 37) within the outer columns (40, 41) is adapted to the horizontal width (WL1, WL2, WL3, WL4, WL5, WL6, WR1, WR2, WR3, WR4, WR5, WR6) of a respective fiber optic distribution device (12, 13, 14, 15, 16, 17, 18, 19, 20, 21, 22, 23) in such a way that the distance (X1, X2, X3, X4, X5, Y1, Y2, Y3, Y4, Y5) of each two adjacent guide elements (26, 27, 28, 29, 30, 31, 33, 34, 35, 36, 37) corresponds between 30% and 50% of the horizontal width (WL1, WL2, WL3, WL4, WL5, WL6, WR1, WR2, WR3, WR4, WR5, WR6) of a respective fiber optic distribution device (12, 13, 14, 15, 16, 17, 18, 19, 20, 21, 22, 23).

9. The fiber optic distribution system of claim 7 or 8, characterized the distance of adjacent guide elements (38, 39) with the middle column (42) is adapted to the distance (X1, X2, X3, X4, X5, Y1, Y2, Y3, Y4, Y5) of each two adjacent guide elements (26, 27, 28, 29, 30, 31, 33, 34, 35, 36, 37) within the outer columns (40, 41).
